# EUROPEAN PATENT SPECIFICATION

(11) **EP 3 052 585 B1**
(45) Date of publication and mention of the grant of the patent: **16.06.2021**
(21) Application number: 14851167.8
(22) Date of filing: 02.10.2014
(51) Int. Cl.: C10L 1/32, F02M 43/04, F02B 45/10, F02M 67/00, F02M 67/12

(54) **IMPROVED CARBONACEOUS SLURRY FUEL**
VERBESSERTER KOHLENSTOFFHALTIGER SCHLÄMMUNGSBRENNSTOFF
COMBUSTIBLE CARBONÉ EN SUSPENSION AMÉLIORÉ

(30) Priority: 02.10.2013 AU 2013903857
(43) Date of publication of application: 10.08.2016
(73) Proprietor: Commonwealth Scientific and Industrial Research Organisation, Campbell, ACT 2612 (AU)
(72) Inventor: WIBBERLEY, Louis James, Garden Suburb, New South Wales 2289 (AU); DYER, Remy Paul, Hamilton, New South Wales 2303 (AU)
(74) Representative: Gill Jennings & Every LLP
(86) International application number: PCT/AU2014/000952
(87) International publication number: WO 2015/048843

(56) References cited:
- EP-A1- 0 092 353
- DE-A1- 3 621 319
- FR-A1- 2 568 263
- US-A- 4 282 006
- US-A- 4 511 365
- US-A- 4 549 881
- US-A- 4 569 484
- US-A- 4 569 484
- US-A- 4 599 089
- US-A1- 2006 112 638
- US-B2- 7 677 791

## Description

### Field of the invention

The invention relates to a fuel for a combustion chamber of a compression ignition or diesel type engine that includes carbonaceous particles suspended in an aqueous solvent, and the use of that fuel in a compression ignition or diesel type engine.

### Background of the invention

Current direct injection technology for combustible fuels in diesel engines employs single-fluid pressure atomisation of relatively low viscosity fuel. This involves pumping the fuel into the engine through small orifices (0.2-1 mm) at high pressure (50-200 MPa). This generates high velocity (typically 200-400 m/s) which causes rapid jet breakup and atomisation. Breakup and atomisation occurs due to a number of effects, including the turbulence in the liquid stream leaving the injector nozzle orifices, and interaction of the high velocity liquid with the relatively dense compressed air charge in the combustion chamber. For heavy fuel oils the fuel viscosity is controlled to 5-20 mPa.s by heating (up to 165 °C) before it enters the engine injection pumps, reducing the energy required to move the fluid.

An alternate technology is to use coal water slurry fuels to replace heavy fuel oil for diesel engines, particularly for stationary electricity generation at greater than the 5 MW scale, and for large shipping. The fluid properties of coal water slurry fuels are significantly different to diesel and fuel oils, in particular the coal slurry has a much higher shear-thinning non-Newtonian viscosity, and both the coal particles and contaminant mineral particles are abrasive to low hardness steel, preventing the fuel from lubricating the fuel system.

The production, transportation, storage and use of these fuels causes a number of technical problems which have discouraged commercialisation of the fuel cycle, despite the significant cost and energy security advantages of coals.

The technical problems in transportation and storage include the tendency for coal water fuels to settle and form shear-thickening sludge which is difficult to remobilise from the bottom of storage tanks, and which necessitates equipment to stir and circulate the fuel, together with the use of additives. Furthermore, injection of coal water fuels into diesel engines causes technical issues of more serious character, and most are due to the difficulty of atomising the fuel in the engine.

Despite these issues coal water slurry fuels have been successfully demonstrated in adapted diesel engines in a number of demonstration programs - provided hardened fuel system components were used, and the fuel had a sufficiently low viscosity. After extensive experimentation and small scale demonstration work previous investigators have nominated the following fuel specifications for a suitably modified diesel engine: viscosity less than 500 mPa.s at a shear rate of 100/s, and preferably below 300 mPa.s a shear rate of from about 100 to about 1000/s; ash content of less than 2 wt%; and particle size distribution having a top size of 30 µm.

The coal loading is varied to achieve the viscosity requirement, and has limited the coal loading (bituminous coals) to mostly 45-50 wt% depending on the type and amount of dispersants added to the slurry, with higher amounts of more effective dispersants allowing a coal loading of around 50 wt% whilst maintaining the viscosity specification of less than 500 mPa.s at a shear rate of 100/s. Higher viscosities have been deemed unsuitable due to the difficulty previous fuel injection systems have had with reaching sufficient velocity for good atomization. For low rank coals the maximum coal loading is significantly lower, even after hydrothermal treatment and other processing.

Poor atomisation has been shown to increase the ignition delay, which increases the proportion of premixed combustion and the rate and size of pressure rise in the cylinder at the onset of combustion, leading to undesirable heat release rates and engine derating to avoid mechanical failure. This is in part due to increased coal agglomeration (during droplet drying) resulting in slow/late combustion of relatively large char residue - regardless of the starting particle size distribution of the fuel. The latter also causes slow burning, and unburnt char contamination of the cylinder walls. As atomisation is critical to viable engine operation, viscosity has been used as a key fuel property, and one which has set the upper coal loading in the prior art.

Coal water slurries useful as direct injection fuels generally exhibit shear thinning across a range of shear rates, interspersed with regions of constant viscosity. The viscosity of coal water mixtures for diesel engines is usually reported and specified at a shear rate of 100/s or sometimes 1000/s, even though the effective viscosity during the very high shear processes of atomisation is likely to be lower. For the shear rates involved in pressure atomisation, around 200,000/s, the effective viscosity could be 2-5x lower then measured at 100/s, depending on the rheological characteristics of the mixture.

It is noted that while surface tension is also important during atomisation, viscosity has proven to be the more effective parameter to control, resulting in no prior specification for surface tension.

It is also noted, that, while water-based slurries of coals are used commercially in boilers and gasifiers, atomisation is far less onerous in these applications than for diesel engines. This is due to the much longer time for the combustion/gasification processes (around 1000 ms in boilers and gasifiers versus 10 to 50 ms in engines), and which has allowed coal water slurries with viscosities 2 to 3 times higher than specified for diesel engines to be routinely used.

Whilst the prior art fuel specification above has given good performance in engines with suitably modified conventional pressure atomisation equipment, it imposes cost and efficiency constraints on the fuel cycle. In particular, the viscosity specification seriously limits the maximum coal loading, increases the need for costly dispersants (for example polystyrene sulphonate). The increase in water fraction reduces the thermal efficiency whilst increasing ignition delay. This reduces the operable speed, and thus specific output of the engine relative to that for drier fuel mixtures. In addition, the reduced coal loading increases the transportation and storage costs, and reduces engine fuel pump capacity. A further disadvantage of a lower coal loading is a significant reduction in the stability of the slurry, causing settling in tanks and requiring the use of stabilisers (such as carboxymethyl cellulose (CMC) or xanthan gum) and additional equipment such as the use of specialised tank stirrers and circulation pumps.

It is an object of the invention to incrementally improve upon at least some of the above mentioned shortcomings of the prior art, resulting in a net benefit to the already favourable economic aspects of the prior art.

US4599089 discloses a coal-water slurry comprising 70 wt% pulverised coal, a non-ionic polymeric dispersant and 0.108% lecithin.

US2006/112638 discloses aqueous slurries of upgraded biomass, including an example containing 70 wt% solids.

FR2568263 discloses in an example a carbon slurry having 32 wt% water and containing a polyoxyethylene.

EP092353 discloses a series of coal-water slurries, made by mixing, containing 65 wt% coal as well as Ca and/or Na lignosulphonate dispersants.

DE3621319 discloses aqueous slurries of two different coal samples.

US4569484 discloses a compressed air blast injector for combustion engines, e.g. diesel engines, suitable for use with coal slurries. Coal-water slurries are mentioned.

Reference to any prior art in the specification is not an acknowledgement or suggestion that this forms part of the common general knowledge in any jurisdiction or that this prior art could reasonably be expected to be understood, regarded as relevant, and/or combined with other pieces of prior art by a skilled person in the art

### Summary of the invention

The inventors have discovered that much higher viscosity slurry fuel can be high atomised to give short ignition delay and efficient combustion under diesel engine conditions. This discovery is counter intuitive to the teachings of the prior art. The present invention is directed towards providing an improved fuel that when combined with a suitable atomiser, will give overall improvement in the fuel cycle - from fuel production and transportation, through to use in the engine. Furthermore, the improved fuel increases the benefits of future advanced atomisation technology in diesel engines. Thus according to the present invention, a new fuel is specified with a minimum viscosity that is substantially greater than the upper viscosity limit previously disclosed or considered desirable for use in direct-injection, compression ignition or diesel type engines.

It should be understood that unless otherwise specified, ail the viscosities listed in the present specification are as measured at (a controlled) 25° C.

In one aspect of the invention there is provided a fuel according to claim 1.

In another aspect of the invention there is provided a method for preparing a fuel according to claim 15.

It should be appreciated that the fuel of the present invention is suitable for use in a directly injected combustion chamber of a compression ignition or diesel type engine.
The particular engine may therefore by a conventional compression ignition or diesel engine, or an engine improved, modified or otherwise derived from conventional compression ignition or diesel engines to operate using a fuel including carbonaceous particles suspended in an aqueous solvent. One example is a direct injection carbon engine (DICE) - a diesel engine which has been modified to enable combustion of water-based slurry of micronised refined carbon fuel (MRC).

The fuel of the present invention has a viscosity that is greater than, or greater than or equal to about 1000 mPa.s at 25 °C for shear rates of up to 750/s. For example, the viscosity of the fuel is greater than, or greater than or equal to about 1000 mPa.s at 25 °C for shear rates of about 500/s. In other embodiments, the viscosity of the fuel is greater than, or greater than or equal to about 1000 mPa.s at 25 °C for shear rates of about 300/s and below.

The viscosity of the present invention is preferably a generally shear-thinning viscosity. A generally shear-thinning viscosity is one in which the slope of the viscosity vs shear rate curve is usually negative. It should be appreciated that fuels of the present invention can still exhibit regions where the slop becomes positive (shear thickening), and in these areas conditioning (controlled shear mixing) may be required to massage out such kinks. It should therefore be understood that "generally" shear thinning means the viscosity is lower on the right hand side of a viscosity vs shear rate curve at high shear rates, then at the left, even if the curve has an inflexion point in between.

In some embodiments, the fuel of the present invention has a shear-thinning viscosity that is greater than, or greater than or equal to about 1000 mPa.s at 25 °C for shear rates of up to 750/s. For example, the viscosity of the fuel is greater than, or greater than or equal to about 1000 mPa.s at 25 °C for shear rates of about 500/s, and then has a region of constant viscosity until dipping below 1000 mPa.s at 750/s or above. In other embodiments, the viscosity of the fuel is substantially greater than, or greater than or equal to about 1 000 mPa.s at 25 °C for shear rates of about 300/s and below, whilst not reducing below 1000 mPa.s until a shear rate greater than 750/s is applied.

In other embodiments, the viscosity is greater than, or greater than or equal to about 1 000 mPa.s at 25 °C for shear rates of up to 1000/s. Preferably, the viscosity is greater than, or greater than or equal to about 1000 mPa.s at 25 °C for shear rates of up to 2000/s. More preferably, the viscosity is greater than, or greater than or equal to about 1000 mPa.s at 25 °C for shear rates of up to 5000/s. Most preferably, the viscosity is greater than, or greater than or equal to about 1000 mPa.s at 25 °C for shear rates of up to 10000/s.

In another aspect of the invention there is provided a fuel for use in a combustion chamber of a direct-injection, compression ignition or diesel type engine, the fuel including carbonaceous particles suspended in an aqueous solvent, wherein the fuel has a viscosity that is greater than, or greater than or equal to about 1000 mPa.s at 25 °C for shear rates of up to 5000/s.

In some embodiments, the fuel has a viscosity of greater than, or greater than or equal to about 4000 mPa.s at 25 °C at a shear rate of about 0.1/s or lower. More preferably the fuel has a viscosity of greater than, or greater than or equal to about 6000 mPa.s at 25 °C at a shear rate of about 0.1/s or lower. Even more preferably the fuel has a viscosity of greater than, or greater than or equal to about 10,000 mPa.s at 25 °C at a shear rate of about 0.1/s.

Alternatively, or in addition to the above, it is preferred that the fuel has a viscosity of greater than, or greater than or equal to about 2000 mPa.s at 25 °C at a shear rate of about 1/s. More preferably the fuel has a viscosity of greater than, or greater than or equal to about 3000 mPa.s at 25 °C at a shear rate of about 1/s. Even more preferably the fuel has a viscosity of greater than, or greater than or equal to about 4000 mPa.s at 25 °C at a shear rate of about 1/s.

Alternatively, or in addition to the above, it is preferred that the fuel has a viscosity of greater than, or greater than or equal to about 800 mPa.s at 25 °C at a shear rate of about 10/s. More preferably the fuel has a viscosity of greater than, or greater than or equal to about 900 mPa.s at 25 °C at a shear rate of about 10/s. Even more preferably the fuel has a viscosity of greater than, or greater than or equal to about 1000 mPa.s at 25 °C at a shear rate of about 10/s.

In an embodiment, the fuel is a Bingham plastic having a yield stress. For example, the fuel may be formulated to increase the mixtures Bingham-plasticity and pseudo-plastic characteristics, which is advantageous as it enables fuels that are pastelike and semi-dry slurries to be used.

The prior art does not recognise the benefits the higher viscosity fuel that includes carbonaceous particles suspended in an aqueous solvent. The prior art generally teaches that it is favourable to reduce the viscosity of the fuel in order to avoid atomization deficit, a problem whereby the engine fails to completely combust the fuel, resulting in a comparatively large efficiency loss. The present invention allows the use of a fuel as described above, wherein the fuel may be of sufficiently high viscosity that it forms a fuel paste, with an engine, such as a diesel engine having either conventional pressure atomisation, or alternative methods of atomisation. The fuel need have low viscosity only by extremely high shear rates (<200,000/s), because the generally shear thinning characteristic itself tends to focus all shear close to the boundary of the fluid.

The mass fraction of the carbonaceous particles in the fuel is greater than or equal to about 45 wt%, preferably greater than or equal to about 53 wt%. Preferably, the mass fraction of the carbonaceous particles in the fuel is greater than, or greater than or equal to about 55 wt%. More preferably, the mass fraction of the carbonaceous particles in the fuel is greater than, or greater than or equal to about 60 wt%. Most preferably, the mass fraction of the carbonaceous particles in the fuel is greater than, or greater than or equal to about 65 wt%. This is advantageous as the higher solids content of the fuel increases the specific energy and stability of the fuel, and the thermal efficiency of the engine. The maximum mass fraction of the carbonaceous particles in the fuel is up to about 85 wt%.

In an embodiment the carbonaceous particles have an average particle size of less than about 30 µm on a mass basis, preferably equal to or less than about 20 µm on a mass basis. In some embodiments, the average particle size is between about 10 µm and about 20 µm on a mass basis.

The upper size of the carbonaceous particles is preferably about three to about ten times larger than the mass mean size. The upper size / top size is understood to be the size occupied by the largest 5 % of population and therefore may include far larger sizes with diminishing probabilities. The upper size range is also known as the d95, which is the diameter below which 95 % of the mass is distributed. Thus the d95 is from about three to about ten times larger than the mass mean size. More preferably, the d95 of the carbonaceous particles is about four to about five times larger than the mass mean size. It will be appreciated that adopting a large size distribution ratio allows the solids loading to be raised for a given viscosity limit. There is a strong inverse correlation between fuel viscosity and particle size distribution(s) for a given solids loading. Similarly there is reasonable correlation between viscosity and stability.

Preferably, where the carbonaceous particles have a mass average particle size of equal to or less than 20 µm, the carbonaceous particles exhibit a broad size range, for example from greater than 0 µm and up to about 100 µm. More preferably, the carbonaceous particles exhibit a size range from greater than about 1 µm and up to about 80 µm. The provision of a broad size range is advantageous as it improves the packing efficiencies of the coal particles within the fuel composition which allows fuels with a high loading of carbonaceous particles to be produced (for example carbonaceous particles at a mass loading of up to 85 wt%). This is because smaller particles are able to fit into the interstitial spaces between the larger particles.

Alternatively the fuel composition may be formed using multiple populations of carbonaceous particles having different size ranges. For example, the fuel may include carbonaceous particles having a bimodal size distribution. In this case the fuel includes a first population of carbonaceous particles having a first size distribution about a first mass mean value, and a second population having a second size distribution about a second mass mean value, wherein the first mass mean value is less than the second mass mean value. In this case at least some of the particles in the first population are sized so that they fit into interstitial spaces formed between particles in the second population.

In a further example, the fuel may include particles having a tri-modal size distribution in which case the fuel is as described above, but additionally includes a third population of carbonaceous particles having a third size distribution about a third mass mean value. The third mass mean value is smaller than the first mass mean value such that these particles are sized to fit into the interstitial spaces formed by particles in the first and second populations.

As discussed previously, the d95 of the particles is about three to about ten times the mass mean size and preferably about four to about five times the mass mean size. Preferably, in this case the top size is around 200 µm - noting that the ratio of mass mean to top size is likely to be reduced by classification and re-milling (i.e. close circuit milling) to ensure that the coal can burn out within the engine combustion time. As the top size increases the particle size distribution naturally becomes sufficiently broad to achieve high solids loadings, where smaller particles in the size distribution are able to fit into interstitial spaces formed between larger particles in the size distribution.

In an embodiment, the carbonaceous particles are hydrophobic. This is preferred as it improves the dispersion of the particles within the solvent.

In an embodiment, the carbonaceous particles may be selected from the group selected from coal, charcoal, wood, various hydrocarbons, and organic matter whether biological in nature or organic compounds etc. Preferably, the carbonaceous material is coal. Any type of coal may be used, for example anthracite, bituminous coal, or a brown or lignitic coal may be used. This is particularly advantageous as coal is readily available as a carbonaceous source.

It is preferred that the carbonaceous source has low ash content, preferably less than 2 wt%, more preferably less than 1 wt%, most preferably less than 0.5 wt%.

In the case where the carbonaceous particles are coal, it is preferred that the coal has undergone some form of pre-treatment. Pre-treatment may include removal of the bulk of the mineral ash contamination and in the case of the lower rank coals some form of densification and alteration of the surface properties to render the coal more hydrophobic to enable a fuel with a higher coal loading to be achieved. For example bituminous coal demineralisation can be achieved by selective agglomeration, flotation and cyclones.

In an embodiment, the fuel additionally includes a dispersant. The dispersant is important for maintaining the suspension of the carbonaceous particles within the aqueous solvent. Preferably, the dispersant is selected from the group consisting of: an anionic dispersant which provides a surface negative charge and steric hindrance, a non-ionic dispersant which provides steric hindrance, or an amphoteric dispersant which provides both negative and positive charges. More preferably, the anionic dispersant is selected from the group consisting of: sodium salts of: polystyrene sulphonate, polyisoprene sulphonate, carboxyl methyl cellulose, humic acid, polyacrylates, and copolymers of acrylic acid and other acrylic monomers; sodium or ammonium salts of: lingo suphonates, naphthalene sulphonate, or naphthalene sulphonate formaldehyde condensate. More preferably, the non-ionic dispersant is selected from the group consisting of cellulose ethers, such as hydroxyethyl cellulose or hydroxypropyl cellulose; polysaccharides, such as dextrin; polyoxyethylene sorbitan monooleate, or rosin or saponin based dispersants. More preferably the amphoteric dispersant is a polycarboxylate.

The fuel may also include stabilisers such as natural gums including guar, rhansam, xanthan and gellan gums, phosphate salts, or ferrous sulphate.

The fuel may also include biocides such as formaldehyde to reduce microbial activity.

The fuel of the present invention has greater stability than prior carbonaceous particle fuels. In this regard, the carbonaceous particles suspended in an aqueous solvent have a lesser tendency to settle out of the slurry, particularly during storage. The fuel can therefore be formulated with less or even substantially no stabilisers (such as carboxymethyl cellulose (CMC) or xanthan gum) when required for storage applications. Whilst not wishing to be limited by any one theory, it is thought that the higher carbonaceous particle loading of the fuel of the present invention (compared to prior art fuels) assists in the stability of the fuel.

In another aspect of the invention, there is provided the use of a fuel as previously described in a combustion chamber, such as the combustion chamber of an engine, such as a direct-injection, compression ignition or diesel type engine. More preferably the fuel is for use in a modified diesel engine, such as a diesel engine having a blast injector.

It is advantageous to use a blast atomiser injector as it directly applies the kinetic energy intensity to atomise high solids content fuel that is highly viscous with a wide size distribution, containing both a high proportion of fine material as well as a larger top size. The direct application of kinetic energy from the blast fluid circumvents frictional energy losses within the fuel allowing more atomization energy to be used efficiently (i.e. to overcome surface tension effects.) The much lower fuel velocity and larger fuel passages minimize frictional losses handling the fuel as well as admit a larger maximum size of fuel particle than would otherwise be possible.

In one embodiment (first form), the blast injector includes: a central tube terminating in a first outlet for emitting a jet of the fuel along a central axis; and a structure adjacent to the central tube so as to define, with the tube, duct means communicating with one or more second outlets for blast gas about the first outlet, which duct means is configured to accelerate the blast gas so that it emerges from the second outlet(s) as a blast stream of supersonic velocity; wherein adjacent the second outlet(s) an undercut internal face or faces of the structure are axially convergent so as to direct the emergent supersonic blast stream into the jet of the fuel downstream of the first outlet, thereby atomising the fuel.

In an embodiment, said structure surrounds the central tube whereby said one or more second outlets comprise an annular outlet about the first outlet, and said internal face or faces of said structure adjacent the second outlet comprise a continuous marginal face portion adjacent the second outlet. Preferably the opposed surface of the central tube comprises a conical or pyramidal end surface of the central tube is opposed to said continuous marginal face portion for further facilitating said directing of the emergent supersonic blast stream into the jet of particulate slurry fuel downstream of the first outlet.

In another embodiment, the opposed surface of the central tube comprises one or more oblique end surfaces of the central tube are opposed to said internal face or faces for further facilitating said directing of the emergent supersonic blast stream into the jet of particulate slurry fuel downstream of the first outlet.

Advantageously, the internal face(s) and the end surface(s) are such that in operation the angle of convergence of the blast stream with respect to send central axis is in the range 5-90', preferably 30-85', more preferably 40-80'.

The internal face or faces adjacent the second outlet may be at least partially curvilinear and concave in the direction of flow of the blast gas.

The internal face or faces adjacent the second outlet may alternatively or additionally be generally straight in the direction of flow of the blast gas.

The duct means may be configured to accelerate the blast gas by means of a restriction arrangement that is preferably smoothly convergent - divergent in the direction of flow of the blast gas.

In an embodiment, the first outlet is generally circular and the supersonic blast stream is of annular cross section.

Alternatively, the first outlet may be elliptical or elongate in cross section whereby the jet of particulate slurry fuel is a fan jet.

The first outlet may be an elongate slot and the one or more second outlets then comprise a pair of slots to opposite sides of, and generally parallel to, the first outlet.

In another embodiment (second form), the blast injector, includes: a central tube terminating in a first outlet for emitting a jet of fuel along a central axis; and structure surrounding the central tube so as to define with the tube a duct communicating with a second outlet for blast gas about the first outlet, which duct is configured to direct the blast gas so that it emerges from the second outlet as a blast stream of supersonic velocity; wherein the second outlet is configured with an undercut internal face or faces of said structure opposed to a surface of the central tube so that the emergent blast stream is axially convergent onto the jet of fuel for confining the jet within a virtual orifice of the blast stream downstream of the first outlets, whereby to facilitate downstream atomisation of the fuel and to reduce wear of the first outlet by the fuel.

The emergent blast stream may be spaced from the jet of particulate slurry fuel laterally of the fuel's emission for the first outlet, whereby the axially convergent blast stream may be highly turbulent immediately upstream of said virtual orifice, to further facilitate atomisation of the slurry fuel.

Preferably, the virtual orifice confining the jet of particulate slurry fuel induces downstream divergence of the jet whereby to facilitate atomisation of the particulate slurry fuel.

Advantageously, said undercut internal face or faces of said structure opposed to a surface of the central tube comprise a continuous marginal face portion of said structure adjacent the second outlet.

In an embodiment of this second form of the blast injector, the second outlet comprises an annular outlet about the first outlet.

The opposed to a surface of the central tube may comprise a conical or pyramidal end surface of the central tube may be opposed to the continuous marginal face portion for further facilitating said axial convergence of the emergent supersonic blast stream onto the jet of particulate slurry fuel.

In this second form of the blast injector, the duct may be configured to accelerate the blast gas by means of a restriction that is preferably smoothly convergent - divergent in the direction of flow of the blast gas.

It should be appreciated that the preceding described features of the first form of the blast injector can also apply to this second form of the blast injector.

In a further embodiment (third form), the blast injector includes a nozzle including: coaxial tubes including a central tube for conveying the fuel from the injector through the nozzle to emerge from the central tube at the nozzle outlet; and an annular sleeve disposed around said central tube having a common axis with the central tube, and defining an annular passageway for the flow of a blast fluid as a means for conveying the fuel below supersonic velocity, and for causing the blast fluid to flow through said annular passageway, and a converging section following by a throat and then by a diverging section near the outlet of the annular passageway causing said blast fluid to emerge at a supersonic velocity and with reduced pressure at essentially the highest combustion chamber pressure in the engine at the end of the injection. The contour of the converging and diverging sections providing uniform change in gas velocity.

The fuel can be used in a combustion apparatus, preferably a direct-injection, compression ignition or diesel type engine, that includes: structure defining a combustion chamber; and a blast injector, in accordance with reference to any one of the embodiments described above, positioned and configured to inject fuel into the combustion chamber and to atomise the fuel with the accompanying blast stream.

The fuel can be used in a direct-injection, compression ignition or diesel type engine comprising: a fuel according to any one of the previously described embodiments; a structure defining a combustion chamber; and a blast injector configured to inject a jet of the fuel into the combustion chamber with an accompanying blast stream of gas that atomises the fuel. In some embodiments, the blast fuel injector is further configured whereby the blast stream impinges on and atomises the fuel in the combustion chamber and thereby facilitates operation of the apparatus with the fuel. In some embodiments, the blast injector is in accordance with reference to any one of the embodiments described above.

The fuel can be used in a method of operating a diesel engine fitted with a blast injector configured to inject a fuel, as described previously, into the combustion chamber of the engine with an accompanying blast of gas that atomises the fuel, which method includes injecting the fuel by converging the blast to impinge on the fuel in the combustion chamber whereby to atomise the fuel therein for compression ignition In some embodiments, the blast of gas is supplied via a restructure and the gas pressure upstream of the restriction is at least allows 2:1 of the absolute pressure in the combustion chamber, whereby the blast of gas is transonic. The gas pressure upstream of the restriction can be at least about 30 MPa.

Further aspects of the present invention and further embodiments of the aspects described in the preceding paragraphs will become apparent from the following description, given by way of example and with reference to the accompanying drawings.

### Brief description of the drawings

Figure 1 is a graph showing specific energy of coal water fuels from prior art, and a range for an embodiment of the present invention.
Figure 2 is a graph showing viscosity characteristics of coal water fuels from prior art, and the range for an embodiment of the present invention.
Figure 3 is a diagrammatic axial cross-section of an embodiment of a blast injector.
Figure 4 is an end view of the blast injector depicted in Figure 3.
Figure 5 is a geometric diagram of one optimisation of the radial region A in Figure 3.
Figure 6 is a flow diagram corresponding to Figure 5 showing the fuel and blast gas flows and their downstream interaction when the blast injector is in operation.
Figures 7 and 8 are similar diagrams to Figures 3 and 4 of another embodiment of a blast injector.
Figures 9 and 10 are similar diagrams to Figures 3 and 4 of another embodiment of a blast injector.
Figures 11 and 12 depict modifications of the blast injector designed to increase the instability of the jet of fuel prior to interaction with the supersonic blast stream.
Figures 13 and 14 depict modified configurations of the blast injector for providing pre-atomisation to increase the atomisation and coupling with the main supersonic blast stream.
Figures 15 and 16 depict poppet-type embodiments of an embodiment of a blast injector.
Figures 17 and 18 are schematic layouts each showing an electronic controlled blast gas and fuel injection to minimise blast gas consumption whilst ensuring uniform atomisation for the entire injection event.
Figure 19 is a graph showing viscosity characteristics of a black coal based fuel and a brown coal based fuel according to the present invention.
Figure 20 provides graphical results from a blast atomizer experiment showing the fuel pressure, blast gas pressure and chamber pressure waveforms.

### Detailed description of the embodiments

The present invention relates to a fuel that includes carbonaceous particles suspended in an aqueous solution and the use of such fuels in an engine, such as a diesel or modified-diesel engine, for example a direct injection carbon engine (DICE). Embodiments of the fuel of the present invention can be categorised as a type of micronised refined carbon fuel (MRC).

The fuel is a high viscosity fuel and may for example be a viscous liquid, pastelike or a semi-dry slurry.

The term "viscosity" is intended to refer to the apparent "dynamic viscosity" also known as "shear viscosity" rather than "kinematic viscosity". Suitable means for determining the viscosity of the fuel are readily apparent to those skilled in the art. However, a suitable means of determining the viscosity is through the use of a rotational viscometer with cylinder and cup over a shear rate range of from 0.1 to 3000 per viscometer with cylinder and cup over a shear rate range of from 0.1 to 3000 per second. For higher shear stress measurements (greater than 3000 per second) an extrusion viscometer may be used.

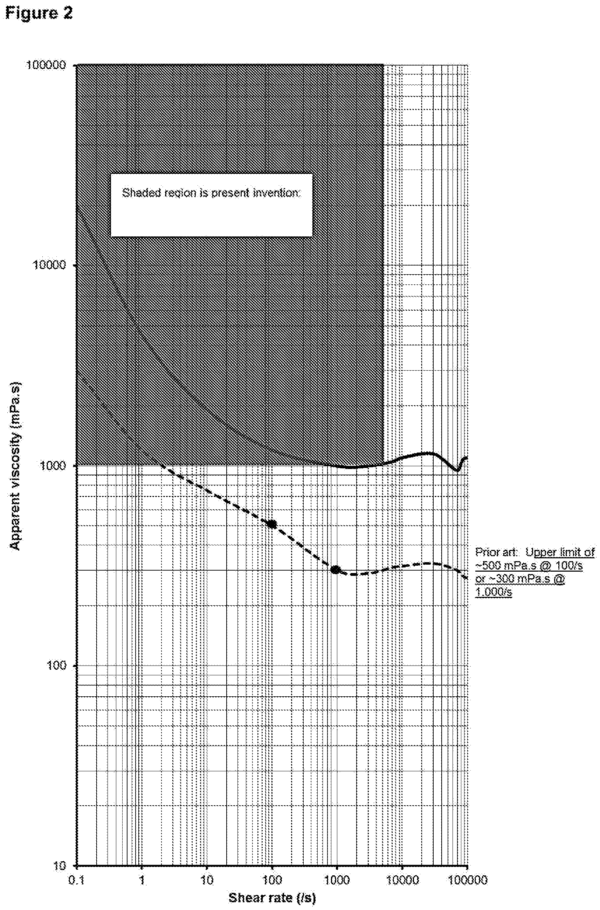

The fuel of the present invention comprises carbonaceous particles suspended in an aqueous solvent, wherein the fuel has a viscosity, preferably a generally shear- thinning viscosity, that is greater than, or greater than or equal to about 1000 mPa.s at 25° C for shear rates of up to 750/s, preferably up to 1000/s. The fuel of the present invention exhibits significantly higher viscosity than the prior art fuel composition across a range of shear rates (see for example Figure 2 discussed below).

Each of the fuels of the present invention comprises an aqueous colloidal suspension of finely ground carbonaceous particles. The suspension can have a paste consistency. Furthermore, the carbonaceous particles are preferably hydrophobic as it improves the dispersion of the particles within the solvent.

The viscosity of the fuel of the present invention is preferably a generally shear- thinning viscosity where the viscosity is lower on the right hand side of a viscosity vs shear rate curve at high shear rates, then at the left, even if the curve has an inflexion point in between. The shape of the viscosity curve is a consideration in formulating the correct fuel. The inventors have found that where the shape of the curve is not generally shear-thinning, for example for a poorly mixed fuel of perhaps slightly too high solids, but otherwise correct formulation, then attempting to pump such a fuel rapidly may cause blockages, which in many cases cannot be cleared by simply pushing harder - the cake effectively becomes porous graphite, and the new fuel simply dewaters and adds onto the blockage.

As previously described, the viscosity of the fuels of the present invention is largely provided by a high solid content from the carbonaceous particles. However, additives (as discussed below) may also be used to enhance this property. The higher solids content of the fuel increases the specific energy and stability of the fuel, and the thermal efficiency of the engine. The mass fraction of the carbonaceous particles in the fuel is greater than or equal to about 45 wt%, preferably greater than or equal to about 53 wt%. The maximum mass fraction of the carbonaceous particles in the fuel is up to about 85 wt%. The mass fraction can be dependent on the type of carbonaceous particles used in the fuel.

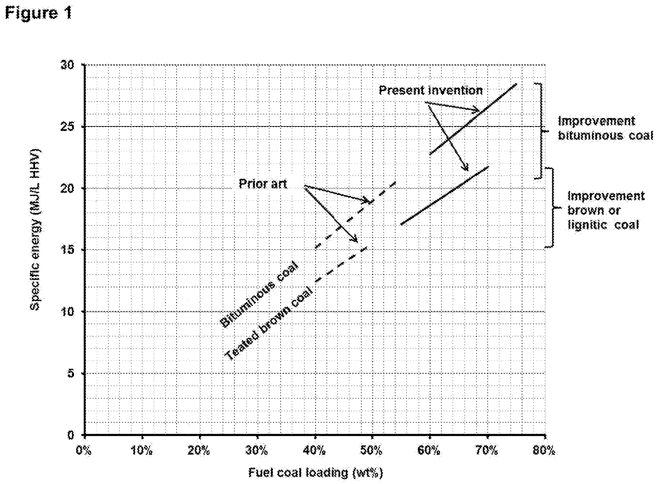

Figure 1 is a graph showing specific energy of coal water fuels from prior art, and a range for fuels according to embodiments of the present invention. Figure 1 shows that the present invention can provide an increase in specific energy of around 40% for bituminous coals and 30% for hydrothermally processed brown/lignitic coals when these types of coals are configured as a fuel according to embodiments of the present invention.

Whilst not wishing to be limited to any one theory, the Inventors consider that a fuel according to the present invention can be formulated to increase the Bingham-plasticity and pseudo-plastic characteristics of the mixture/ suspension, enabling pastelike and semi-dry slurries to be used in a compression ignition or diesel type engine to advantage.

The particle size distribution of those suspended carbonaceous particles also influences the viscosity of the fuel. It will be appreciated that adopting a large size distribution ratio allows the solids loading to be raised for a given viscosity limit. There is a strong inverse correlation between fuel viscosity and particle size distribution(s) for a given solids loading. Similarly there is reasonable correlation between viscosity and stability. In an embodiment the carbonaceous particles have an average particle size of less than about 20 µm, preferably between about 10 µm and about 20 µm on a mass basis. The upper size (d95) of the carbonaceous particles is preferably about three to about ten times larger than the mass mean size. Various particle distributions (broad size range, bimodal, trimodal or similar) can be used as previously discussed.

Figure 2 is a graph of apparent viscosity vs. shear rate for a fuel according to the present invention, and a prior art fuel composition. As discussed above, the skilled addressee will readily appreciate that the viscosity of the fuel may be measured in a variety of different ways. In this particular case, the viscosity measurements were performed with a Malvern Instruments "Kinexus Pro" rotational viscometer. The measurement was conducted using Cup: PC25 C0026 AL and Spindle: C25 SC0036 SS at a set of shear rate conditions from 0.1 to 3500 /s distributed logarithmically. For higher shear stress measurements (greater than 3000 per second) an extrusion viscometer was used. Viscosity measurements were conducted at room temperature (with the instrument controlling the temperature to 25°C, as previously noted).

With regard to Figure 2, the fuel according to the present invention is a hydrothermally treated Victorian Brown coal containing 53% solids. A brown coal is a low rank coal as per standard coal classification. Brown coal typically has high moisture content and so generally needs to be pre-treated prior to use in the fuel compositions of the present invention. Pre-treatment may include densification of the brown coal, and moisture removal. The brown coal may also be subjected to hydrothermal treatment to adjust the surface properties of the coal, e.g. to make the surface of the coal hydrophobic. Brown coals are particularly useful as they typically have low ash content and are relatively cheap in comparison to other types of coal.

As can be seen in Figure 2, the fuel of the present invention exhibits significantly higher viscosity than the prior art fuel composition across a range of shear rates.

The viscosity of the fuel according to the present invention can be controlled primarily by maximising the solids content. The viscosity can also be controlled through the use of dispersants, optimising the particle size distribution of solids in the fuel and the use of controlled shear mixing, aka conditioning.

The fuel may comprise the high viscosity slurry alone, or could include one or more additives including at least one of a dispersant, a stabiliser, a biocide or combination thereof.

As discussed above, suitable dispersants include anionic dispersants such as sodium salts of: polystyrene sulphonate, polyisoprene sulphonate, carboxyl methyl cellulose, humic acid, polyacrylates, and copolymers of acrylic acid and other acrylic monomers; sodium or ammonium salts of: lingo suphonates, naphthalene sulphonate, or naphthalene sulphonate formaldehyde condensate. Non-ionic dispersant may also be used, such as cellulose ethers, such as hydroxyethyl cellulose or hydroxypropyl cellulose; polysaccharides, such as dextrin; polyoxyethylene sorbitan monooleate, or rosin or saponin based dispersants. Amphoteric dispersant such as polycarboxylate could also be used. Suitable stabilisers include natural gums including guar, rhansam, xanthan and gellan gums, phosphate salts, or ferrous sulphate. Furthermore, suitable biocides include formaldehyde.

As discussed previously, the fuel is ideally suitable for use in a compression ignition or diesel engine. The diesel engine may include a blast injector to atomise the fuel. A suitable blast injector may be that disclosed in PCT/AU2013/000337 published as WO2013/142921A1, the content of which is hereby included in its entirety.

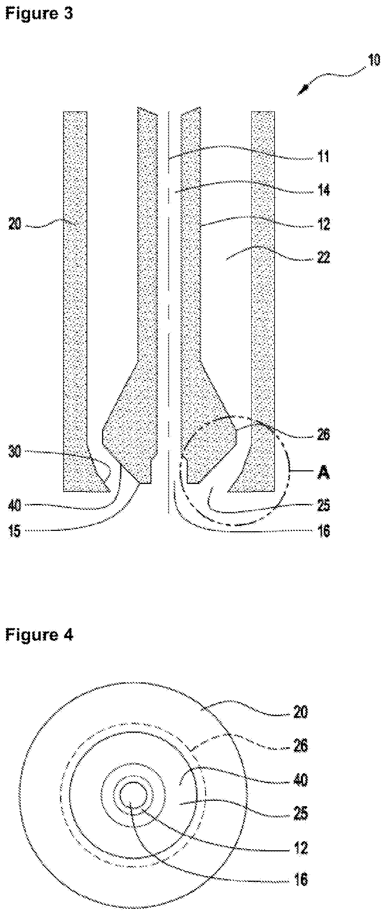

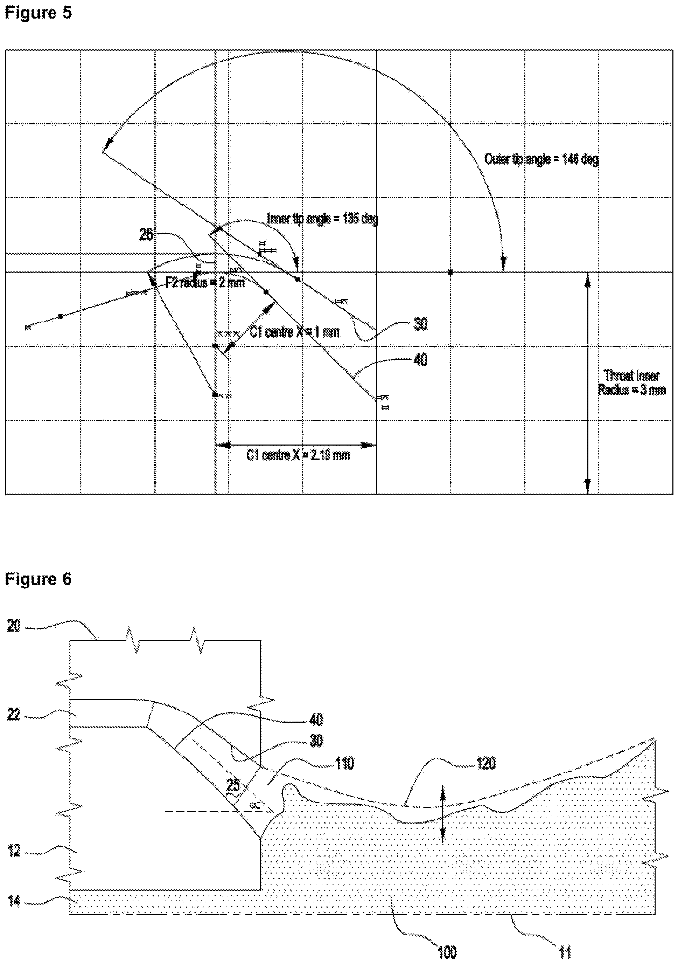

An embodiment of such a blast injector 10 as illustrated in Figures 3 and 4 includes a central tube 12 that defines a central passageway 14 terminating in a first or fuel outlet 16 of a nozzle 15, for emitting a jet 100 (Figure 6) of particulate coal water slurry fuel along a central axis 11.

Structure in the form of a sleeve 20 surrounds central tube 12 so as to define with the tube an annular duct 22 for blast gas, communicating with an annular outlet 25 about fuel nozzle 15. Duct 22 includes a restriction or throat 26, e.g. a convergent-divergent section as illustrated, to direct the blast gas so that it emerges from annular outlet 25 as a blast stream 110 of transonic velocity (Figure 6).

It is preferred that the annular duct 22 for blast gas has a minimum cross-sectional flow area that is smaller than the fuel flow area defined by central passage way 14, or conversely that the minimum fuel cross-sectional area through central passageway 14 is relatively large (even to the point of being unreduced compared to upstream fuel passages), whilst the annular duct 22 for blast gas has a minimum cross-sectional flow area that is relatively small. By "relative" it is meant in comparison to the minimum area that a plain orifice nozzle would have on a conventional injector handling a similar fuel mass flow rate. Preferred sizes are about 2 mm ID for the central passageway 14, and 200um or less for the width of the annular duct 22.

Preferably the central passageway 14 is not smaller than an internal diameter of a fuel supply line. More preferably, the central passageway 14 is larger than the internal diameter of the fuel supply line. This is advantageous as it minimises risk of blockages of the fuel in the blast injector.

Adjacent blast gas outlet 25 an internal continuous marginal face portion 30 of sleeve 20 forms an undercut that is axially convergent so as to direct the emergent supersonic blast stream 110 into the jet 100 of fuel downstream of fuel nozzle 15, for optimal atomising of the fuel. This directing of the blast gas stream 110 is further enhanced by a conical or pyramidal surface 40 on nozzle 15 at the end of central tube 12 about fuel outlet 16, opposed to undercut face portion 30. These opposed surfaces 30, 40 are preferably relatively inwardly divergent towards axis 11. Preferably the continuous marginal face portion 30 is used as a blast gas valve seat.

Means for introducing blast gas to the annular duct 22 may be a compressor or steam boiler. A pump is typically provided for delivering liquid fuel to the central tube 12. This pump may cause the liquid fuel to flow through the central tube at a velocity of about 10 to about 100 m/s. The velocity of the blast fluid gas at the blast gas outlet may be in the range from about 330 to about 600 m/s.

The atomising gas may be compressed air, compressed engine exhaust gases, compressed fuel gases such as natural gas, or steam generated from a boiler advantageously using heat obtained from the engine cooling systems and engine exhaust gases, or an oxygen-exhaust gas mixture as would be relevant to oxy-firing for the purposes of CO₂ capture.

It is noted that the work required to compress the gas to the required for blast atomisation is approximately proportional to the pressure ratio achieved, and therefore the work to provide the additional compression (to say 30 MPa for a diesel engine application) over that used in earlier engine blast atomisers (around 5-6 MPa) is relatively small. This is more than compensated by the more effective use of supersonic blast gas in achieving atomisation, which allows a smaller mass of blast gas to be used. In general, the pressure of the gas upstream of the restriction 26 should be at least about 2:1 of the pressure in the chamber into which the blast stream 110 is injected, for overall supersonic flow to be achieved. At an actual ratio of 2:1, oscillation over the range 1.85 to 2.15 is believed to be acceptable.

The converging-diverging section 26 is constructed so that the blast gas is accelerated to supersonic velocities before leaving the injector and intercepting the fuel jet. The flow is not supersonic everywhere in its cross-section but varies both radially and locally and oscillates in its local velocity. This variation about sonic velocity characterizes the total flow as transonic. The diverging section and the throat may have an area ratio in the range of about 1.3 to about 3, for example about 1.8. For achieving a high degree of atomisation it is required to provide a high momentum flux for the blast gas relative to that of the coal water slurry jet. The momentum flux is defined as the product of the blast gas density and its velocity squared. As the pressure in diesel engines at the time of injection is at least 5 MPa and that of the blast gas greater than 15 MPa, the gas density is much higher than for boiler applications, which substantially reduces the amount of blast gas required, including that required for subsonic blast atomisers used for the early diesel engines.

The design of the atomiser can be achieved using standard physical and thermodynamic equations for compressible flow, and may avoid taking into account the changing pressure in the engine cylinder during the duration of the injection event for the particular fuel, so long as sufficient absolute pressure ratio is available to achieve the design conditions in the blast gas divergent section at the highest expected chamber pressure.

Figure 5 is a geometric diagram showing one optimisation of the radial region A in Figure 3, while Figure 6 is a flow diagram corresponding to Figure 5 showing the fuel and blast gas flows and their downstream interaction when the blast injector is in operation.

The externally convergent flow of the blast gas acts as a continually renewed "virtual orifice" or "gas orifice" 120 with rapidly oscillating shape - which assists mixing and atomisation. The external convergence means that a radial-inwards component exists to the supersonic flow, and this increases the penetration of the blast gas (or "secondary fluid") or against the fuel jet (the "primary fluid"), enabling much less secondary fluid mass rate to be used to achieve similar effect. This overcomes the poor energy efficiency suffered in general by direct-injection blast atomisers, even to the extent of also beating single-fluid atomiser energy efficiency. "Convergent" in this context refers to the overall direction of the flow converging upon the axis of symmetry and the slurry fluid jet there.

The angle of convergence of the blast stream - i.e. the angle α in Figure 6, the angle between the median core in the stream and axis 11 - is preferably in the range 5-90°, more preferably 30-85°, most preferably 40-80°. A suitable angle is thought to be about 75°. In general, the angles of face portion 30 and surface 40, and therefore the angle of convergence of the blast stream, together with the mass flow rate, should be optimised for the properties of the fuel and the purpose of the spray. However there is a trade-off between atomisation efficiency due to the steepness, and spray penetration. Different engine combustion chamber geometries will require different degrees of spray penetration, so the optimal approach angle will vary. It is also desirable to avoid excessive backwash of fuel across the face of nozzle 15.

The triangular region between the supersonic flow region and the axis contains a vortex, which tends to throw some fuel up into the supersonic flow. This eddy effect combines with the pinch effect to create the "virtual nozzle". The viscoelastic property of the fuel causes such eddies before and after step changes in flow area, such as for plain orifice nozzles.

The overall nature of the blast stream flow has extremely high turbulence energy, as the flow becomes transonic upon convergence with the axis of symmetry. The dynamic pressure of the supersonic flow delivered prior to the change in character to transonic flow maximises both the impact pressure against the slurry fuel as well as the sonic turbulence energy. This happens externally, and converts the secondary flow from a supersonic flow to a transonic one upon meeting the primary fluid.

This is in contrast to an atomiser such as that described in US patent 5,044,552, which retains supersonic flow downstream of interaction, intending instead to cause atomization primarily by shear stripping/acceleration. The downside to the latter intent is the much higher (minimum of 1.5x to 3x secondary mass flow vs. primary mass flow, as mentioned in US patent 5,044,552) consumption of secondary fluid. The present atomiser is capable of achieving complete breakup of the fluid with less than a 1:1 mass flow ratio, thereby minimizing the energy required to produce the secondary fluid, a requirement that with designs such as that of US patent 5,044,552 is known to reduce the overall efficiency of the engine to an unacceptable degree. Such internal mixing designs were discarded in the 1920's by the diesel engine industry, for this reason and to avoid the extra complexity of an attendant blast gas system.

The illustrated atomiser retains "supersonic" flow only before the axial-convergence/collision with the primary fluid, because the mixture of gas, droplets of liquids and particles means that the local "speed of sound" is extremely retarded relative to its measure in a pure material. This tends to confine the turbulence energy to the spray, which tends to maximise entropy production by mixing the three materials together. Under these conditions, the flow becomes transonic/subsonic very rapidly relative to the lower speed of sound. Its energy is rapidly dissipated into mixing and heating in a distinctly non-isentropic way.

Further downstream, the mixture undergoes limited expansion, making a spray pattern with an odd wine-glass like profile, as the (underexpanded - still at higher density than surrounding gas) secondary fluid completes its expansion at the new, slow sonically-limited speed, causing further separation of the particles/droplets within the spray.

Judging from this behaviour, it appears that the local speed of sound within the spray is on the order 70 to 100 m/s, as the body of the spray never penetrates much faster than -50 m/s, and the maximum expansion angle of the sides of the spray would be much wider were faster expansion possible.

In summary, the atomised injector of Figures 3 to 6 is supersonic only for the purpose of maximizing dynamic pressure prior to using this energy as a convergent air-blade/gas orifice/external mixing atomiser. In this way it more efficiently utilizes the energy in the fuel, or secondary fluid, allowing the mass quantity and thus the production energy to be conserved. The region where isentropic flow theory is valid is only that region along the flow of the secondary fluid until it loses purity by mixing. Downstream of this the flow is "supersonic" only relative to the retarded speed of sound within the spray plume, and the flow is not isentropic, due to the mixing process.

In the absence of primary fluid, the flow is supersonic down to the convergence region external to the nozzle, and then becomes characteristic of a transonic flow, exhibiting extremely large pressure and velocity fluctuations and producing a vortex street about the flow. In contrast to the nozzle of US patent 5,044,552 it is much less efficient at creating axially-aligned high velocity flow and so less efficient at accelerating the spray plume. This trade off allows better operation as an atomiser, in contrast to typical one dimensional rocket nozzle design, where the objective is to maximise the axis parallel velocity, and where those skilled in that art would normally always avoid convergent supersonic flow, because it is known to always result in a loss of supersonic velocity downstream.

The area ratio of restriction 26 to that of the flow cross section just prior to intersection with the fuel jet is specified by the isentropic flow relations. These equations are solved for the worst case (the highest combustion chamber pressure during the required injection event) only, such that at this design condition the flow is supersonic, and the flow rate of the blast gas is fixed to a ratio of that of the fuel, which itself is dictated by the engine fuel injection rate requirements.

At this worst case design conditions, a normal shock is expected to form at or near the fuel jet, causing a sudden increase in entropy and heat, as well as providing further atomisation energy by virtue of the instability of the shock as it interacts with the fuel fluid surface. The mechanism of fuel break up is due to the dynamic pressure of the blast gas impinging on the fuel jet surface, and the instability of the system causes violent oscillations to further provide energy to disintegrate the fluid.

At conditions of lower chamber pressure than the nozzle design pressure, the convergent-divergent geometry provides an even higher Mach number condition and a further increase in energy available to atomisation.

Compared to boiler applications which operate at atmospheric pressure, the high combustion chamber pressure causes the expanded (supersonic, pre shock) density of the blast gas to exceed that of air at atmospheric pressure by two orders of magnitude. Boiler atomisers therefore do not gain this kinetic energy density advantage.

The cross sectional area of the fuel jet is chosen so that the fuel fluid velocity is relatively low at the desired peak flow rate, to substantially reduce wear through this orifice.

This arrangement provides increased atomisation with reduced mass flow rate of blast gas and without the need for high slurry velocities through the nozzle orifice(s).

It should be noted that the aforementioned isentropic nozzle flow design equations are usually expressed from the point of view towards the design of rocket nozzles, where the final pressure is at atmospheric pressure, and is expected to reduce towards vacuum during flight. Care must be taken when considering the present invention, as final pressure will start at the compression pressure of the engine, and may proceed towards the full combustion pressure, hence requiring a proportionally larger blast gas supply pressure to maintain sufficient atomisation performance. Also, in rocket design the "combustion chamber" is upstream of the convergent-divergent nozzle, whereas in the present invention it is downstream.

The design equations are solved so as to consider the cross section of the blast flow as fully expanded just as this flow intersects with the surface forming the fuel jet boundary. Note that in the annular duct case, the fully expanded flow cross section surface is an annular portion of a cone coaxially aligned with the nozzle, with the apex pointed back into the fuel orifice. The surface of the fuel jet is cylindrical. The fully expanded supersonic flow cross section surface therefore first intersects the fuel jet surface at a line, and mixing proceeds downstream as the mass flows interact.

Note also that as is standard procedure for the design of rocket nozzles, ideally the flow area of the supersonic blast gas increases linearly along the flow from the throat (minimum area) to the fully expanded area at the first intersection with the fuel flow. This condition requires that the walls of the supersonic duct are flat sections only for the slotted jet arrangement; in the annular embodiment the duct profiles will instead be parabolic sections.

Whilst in its simplest form the present invention would be arranged to operate in supersonic mode for the entire injection event to maximise the overall efficiency of atomisation, for many fuel and engine combinations the effective blast pressure can be set such that automatic transitioning between supersonic and subsonic flow conditions provides inherent control of the combustion rate or heat release rate to avoid exceeding the maximum desired cylinder pressure. For example if the cylinder pressure at the start of fuel injection is 14 MPa, and the maximum desired cylinder pressure is 15 MPa, the blast gas pressure at the nozzle would be set to approximately 30 MPa. This would provide supersonic flow conditions at the start of injection resulting in fine atomisation, a short ignition delay and rapid pressure rise. As soon as the cylinder pressure exceeds 15 MPa, the atomisation pressure ratio for the blast gas will decrease below the nominal 2:1 ratio for supersonic conditions and become trans sonic or subsonic causing coarser atomisation, a lower heat release rate, a decrease in cylinder pressure, or a decrease in the rate of rise of the cylinder pressure. Conversely, if the cylinder pressure drops below 15 MPa during the injection event, supersonic flow conditions will automatically resume providing a step increase in the fineness of atomisation and a corresponding decrease in the ignition delay and increase in combustion rate to restore the cylinder pressure. This self-regulating feature is advantageous in maintaining the maximum allowable cylinder pressure for a longer period during the combustion event, and with reduced risk of mechanical overload from cylinder pressure spikes due to ignition delay from poorly atomised and mixed fuel. This positive feedback will also reduce the risk of late burning from poorly atomised fuel. These effects will provide increased engine output and efficiency.

Blast atomisation was investigated during the earlier mentioned USDOE program of 1977-94, and is reported by Nelson and Zimperman (1986) for work performed under DOE/MC/21100-2078. This work was based on promising results with air blast atomisation obtained by the South West Research Institute (SWRI) in 1982. This work was based on SWRI's claim that pressure atomisation in engines was NOT feasible. However, SWRI only used a blast air pressure of 75 bar, which when this was used for injection into the engines used for the latter tests (peak compression pressure of around 55 bar) engine injection would have had a pressure ratio of only 1.3:1, insufficient for supersonic conditions. The SWRI work was investigated further by the Energy and Environmental Research Corporation. Despite extensive effort by the EERC, including the use of an air supply at 1600 psi (107 bar) (producing a pressure ratio somewhat less than 2:1 upstream of the air nozzle throat), they also gave up on blast atomisation and focussed work on pressure atomisation. In all cases there was NO acknowledgement of the benefits of achieving supersonic flow. Overall, over 90% of the effort in prior coal engine work was devoted to achieving effective atomising, and yet air blast atomisation was rejected and without realisation of the requirement for supersonic conditions.

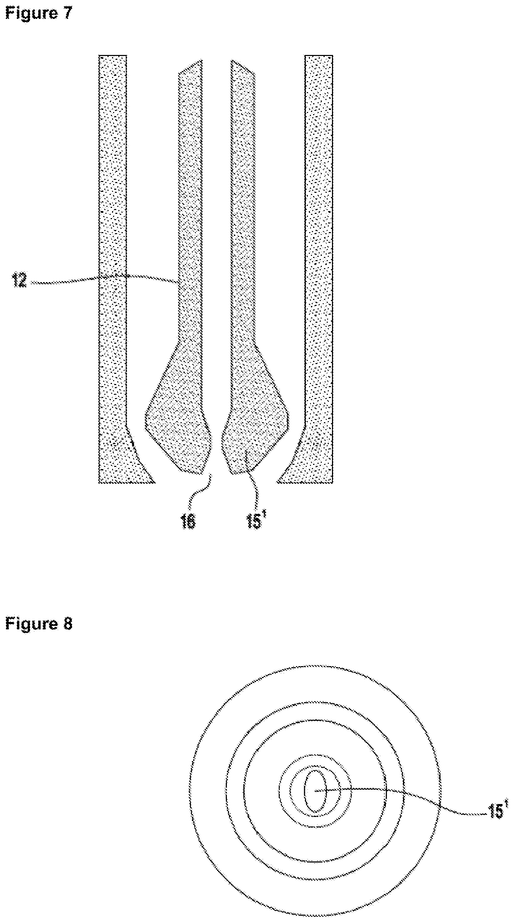

A range of modified embodiments can be used to optimise the injection performance of the atomiser by achieving the desired degree of atomisation, atomised fuel jet shape and velocity, minimising blast gas consumption for a given flow of coal water slurry fuel, generally improving atomisation quantity, minimising poor atomisation quality at the beginning and end of each injection process, minimising component wear - particularly those in contact with the coal water slurry fuel - to improve overall injector longativity and reliability. Exemplary illustrated embodiments include:
A fan-jet orifice 15¹ in the outlet 16 of the slurry tube 12 to shape the liquid slurry jet into a flat fan is shown in Figures 7 and 8. This provides a thinner liquid film to assist the atomisation process.

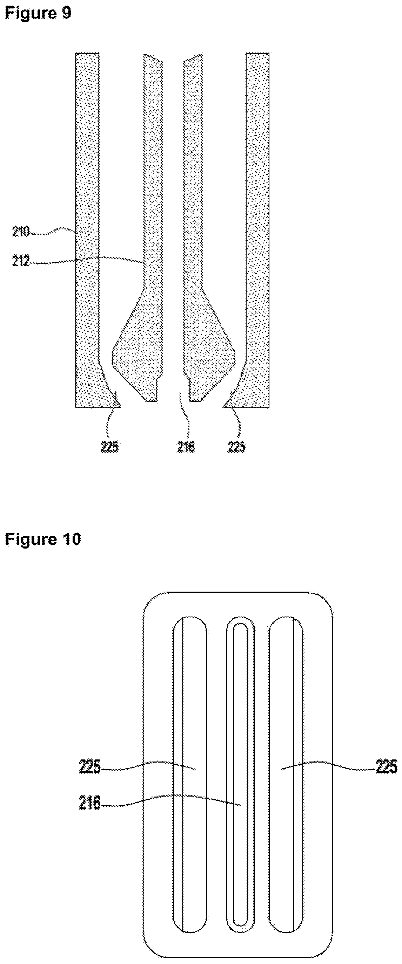

A slotted blast injector 210 (Figures 9 and 10) comprising substantially flat slots 216, 225 for both the slurry fluid and the blast gas outlets to give increased interaction between the supersonic wave and gas and therefore increased atomisation. Central tube 212 is now of elongate cross-section, as are the pair of blast gas outlets 225 to the respective sides of slurry slot 216.

The use of multiple orifices to further improve blast gas interaction with the fuel jet(s), to control jet shape, and increase nozzle capacity; for example, multiple coaxial orifices or stacked slotted orifices.

The use of pneumatic or hydraulic pistons to provide cut-off valve force (in place of springs) to improve rotation of the moving valve seat which provides more uniform valve seat wear and a longer valve life.

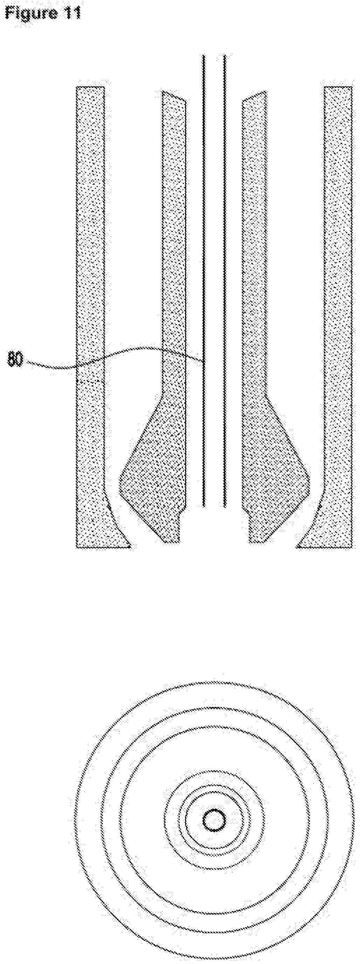

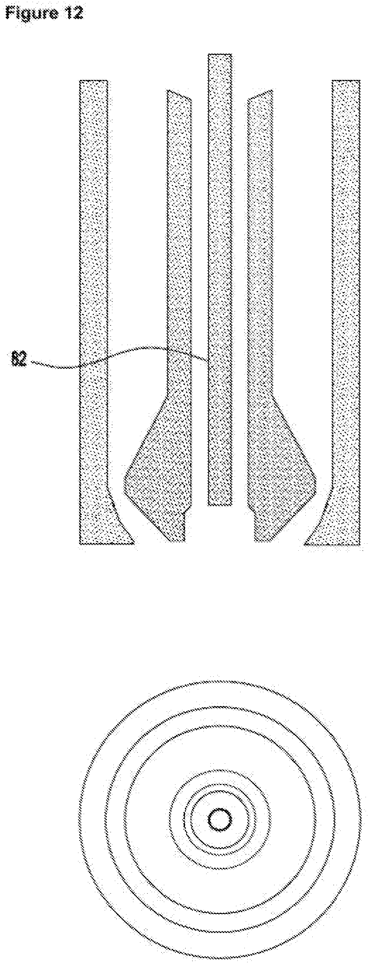

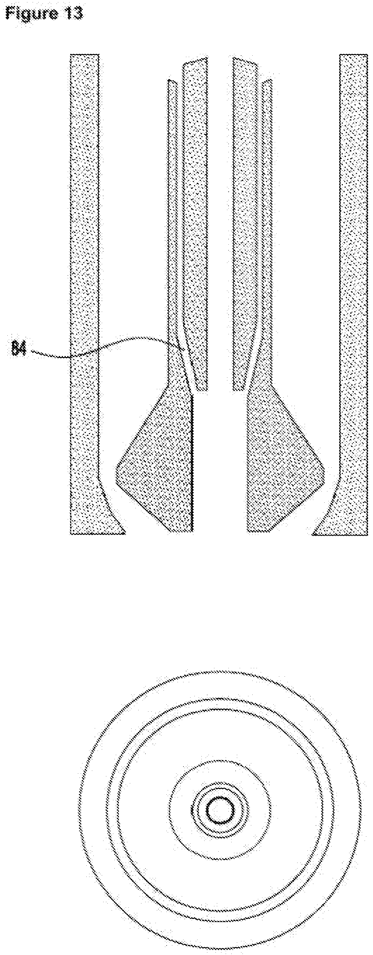

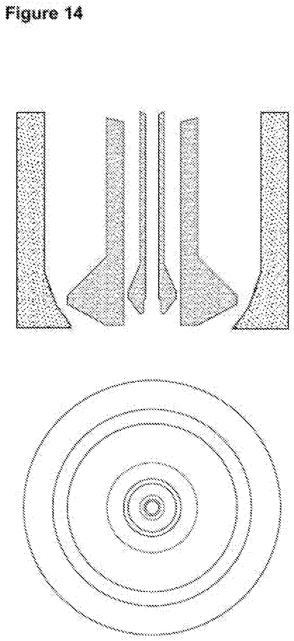

Various embodiments of the coal slurry nozzle may also be used to assist in atomisation by either providing partial pre-atomisation or generating other instabilities in the coal slurry stream. Examples include a small central gas jet 80, as depicted in Figure 11, a turbulence device 82 (Figure 12), an internal mixing pre-atomiser as shown in Figure 13 in which, to avoid nozzle wear, an initial low level of blast gas is introduced for the pre-atomisation step via an annular duct 84 prior to the main slurry exit nozzle 16, and an external mixing pre-atomiser as shown in Figure 14.

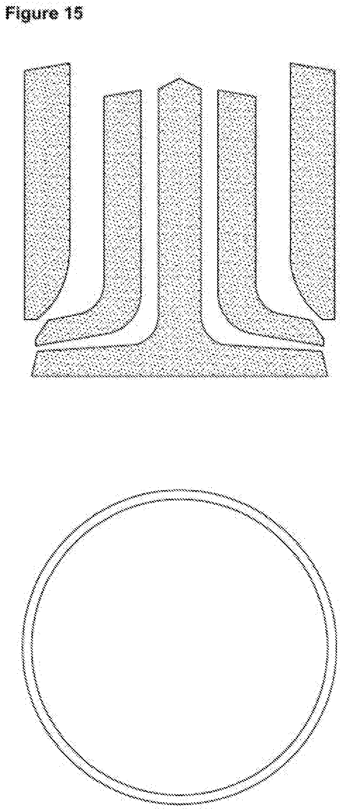

In a further embodiment, the outlet of the slurry tube and blast gas annular orifices is created by poppet shaped nozzles. This arrangement is constructed to shape the liquid slurry jet and the supersonic blast gas into a radially disposed fan around the axis of the valve is shown in Figure 15. The poppet seats may advantageously be constructed with grooves or raised ribs to define the orifice gap and provide control of the jet swirl. This arrangement of the supersonic blast atomiser provides a 360° atomised fan. The arrangement also provides a thin liquid slurry film to assist the atomisation process. This arrangement has particular advantages in engines where the fuel injection positioned nearer the centre of the cylinder centre line.

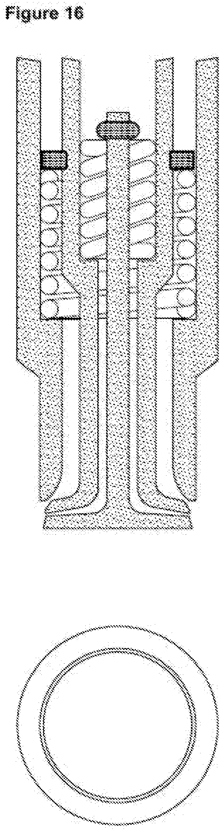

A poppet-type configuration as described above, but where the co-axial poppets are operated as tandem valves to control the release of the blast gas and/or the coal water slurry fuel, is shown in Figure 16. This arrangement has further advantages of combining the function of atomiser and cut-off valves/needle valves for the blast gas and/or fuel.

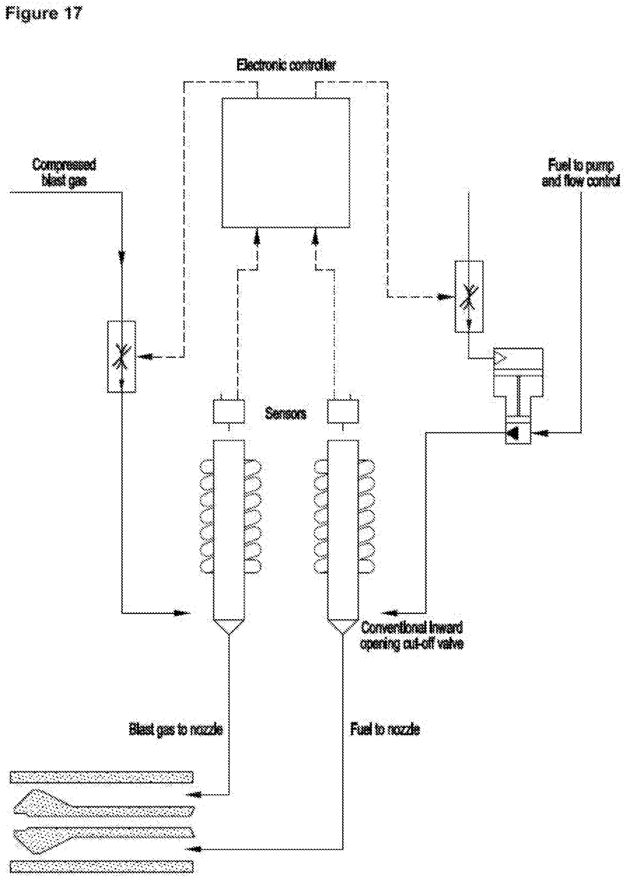

There may be provision for electronically controlled timing of the injection rate and duration of the slurry fluid with the blast gas rate and duration to provide the optimal mass flow of blast gas relative to the slurry fluid flow rate, and to minimise blast gas consumption. This arrangement can also optimise the fuel flow rate during the early part of injection to avoid chilling the charge air. This embodiment is shown schematically in Figure 17.

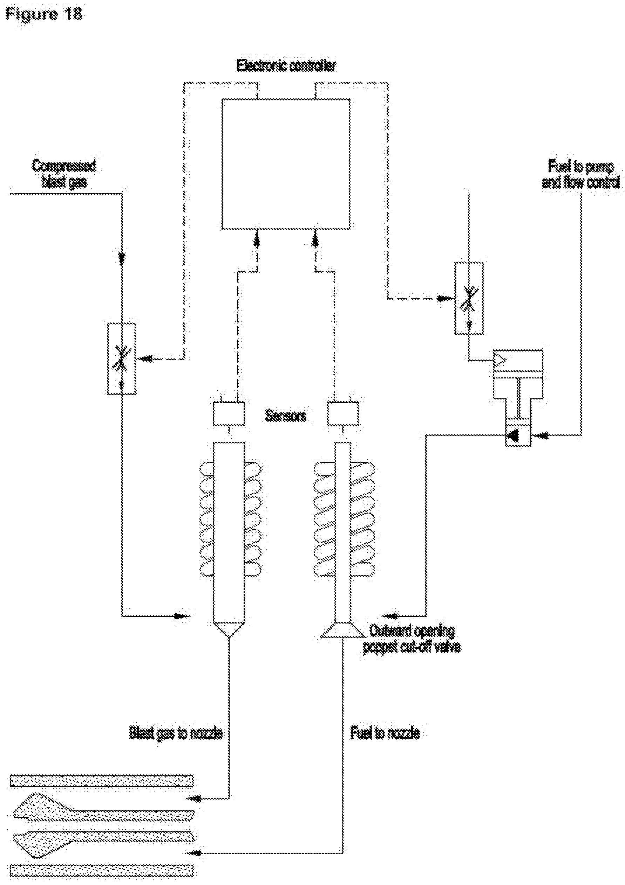

To further reduce injector wear, an embodiment comprising an outwardly opening fuel cut-off valve, is as shown in Figure 18. With this embodiment the valve seating force provided by a spring or hydraulic or compressed gas piston can be substantially reduced compared to that required by an inward opening valve, thereby reducing slurry throttling across the valve seat. This substantially reduces seat wear and enabling the life of the injector components to match that of the supersonic atomising nozzle.

### EXAMPLES

Particular embodiments of the fuel of the present invention will now be exemplified in the following examples:

### Example 1 - Fuel Composition

One preferred carbonaceous material for the particles suspended in the fuel of the present invention is coal. Any type of coal may be used, for example anthracite, bituminous coal, or a brown or lignitic coal may be used. Two types of coals have been used in experimental work to exemplify the properties of the fuel of the present invention. These are a bituminous (black) coal and a Victorian Brown coal. Illustrative nominal compositions of each of the coals used in the experimental fuel samples is provided in Table 1 below:

**Table 1:**

| | **Black coal** | **Brown coal** |
|---|---|---|
| Proximate analysis(db) | | |
| Ash % | 1.9 | 2.5 |
| Volatile matter % | 35.2 | 45.9 |
| Fixed carbon % | 62.8 | 51.6 |
| Gross calorific value MJ/kg | 34.1 | 27.4 |
| Ultimate analysis (db) | | |
| Carbon % | 81.2 | 70.3 |
| Hydrogen % | 5.5 | 4.26 |
| Nitrogen % | 1.7 | 0.57 |
| Sulphur (total) % | 0.52 | 0.25 |
| Oxygen % | 9.1 | 22.12 |

It should be appreciated that each of these coals underwent pre-treatment prior to being mixed and suspended in aqueous solution for formulate the fuel of the present invention. Pre-treatment included removal of the bulk of the mineral ash contamination and in the case of the Victorian Brown coal some form of densification and alteration of the surface properties to render the coal more hydrophobic to a enable a fuel with a higher coal loading to be achieved. Bituminous coal demineralisation was achieved by selective agglomeration, flotation and cyclones. The coal particles then underwent comminution processes (grinding, milling or similar) to obtain the desired particle distribution, as set out in following Example 2.

### Example 2 - Particle Distribution

Nominal particle distributions for bituminous (black) coal and a Victorian Brown coal used in the experimental fuel samples are provided in Table 2:

**Table 2:**

| **Sample** | **d10 (µm)** | **d50(µm)** | **d95(µm)** |
|---|---|---|---|
| Black coal | 2.9 | 10.1 | 43.2 |
| Brown coal | 1.3 | 8.6 | 55.1 |

The particles were mixed into water to provide an aqueous suspension having a coal particle mass in the fuel of between 40 wt and 85 wt%. The exemplary examples were black coal 58 wt% and brown coal 48 wt%.

### Example 3 - Viscosity Measurements

The viscosities of the experimental fuels were measured using a Malvern Instruments "Kinexus Pro" rotational viscometer. The measurement was conducted using Cup: PC25 C0026 AL and Spindle: C25 SC0036 SS at a set of shear rate conditions from 0.1 to 3500 /s distributed logarithmically. For higher shear stress measurements (greater than 3000 per second) an extrusion viscometer is necessary. Viscosity measurements were conducted at room temperature (temperature controlled to 25°C).

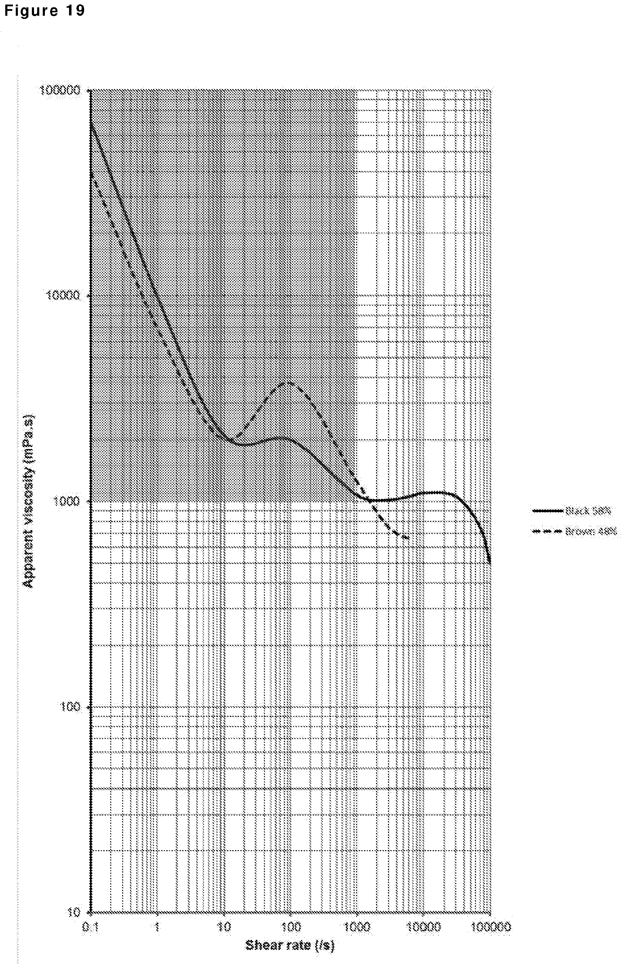

The results for a test run are shown in Figure 19. The tested fluid had the same general composition and particle distribution as set out in Examples 1 and 2.

The curve demonstrates that the tested fluids of the present invention provide a fuel with a very high viscosity at lower shear rates, and with strong shear thinning properties.

The viscosity curve also shows that the viscosity of the fuel are "generally" shear thinning, i.e. the viscosity is lower on the right hand side of a viscosity vs shear rate curve at high shear rates, then at the left, even if the curve has an inflexion point in between (for example the curve in Figure 19).

### Example 4 - Fuel Stability

The settling stability of the fuel of the present invention was tested using a series of gravity settling tests. Three samples of the black coal based fuel of the present invention (composition as outlined in Example 1) were placed in standard 1000 mL graduated vertical settling columns. Each settling column was monitored to empirically determine the amount of settling in each column.

No appreciable settling was evident after day 14 or day 30 in column 1, 2 or 3. Column 3 was left to settle over a further 6 week period. No appreciable settling was evident after 6 weeks.

The test indicated that the carbonaceous particles suspended in the aqueous solvent of the tested fuel has a lesser tendency to settle out of the slurry, particularly during storage compared to prior art fuels (which typically had a much lower solids content).

### Example 5 - Combustion Testing

The fuel of the composition shown in Examples 1 to 3 was used in a combustion test chamber of the following specifications: Volume: fixed at 3500 mL, Maximum rated pressure: 20 MPa. Fuel shot volume: 0.8 mL, Maximum fuel pressure: 105MPa. Fuel Orifice: 400 um.

Standard single fluid direct Injection was via a single jet perpendicular to the 80mm wide optical axis. Compression Ignition gas conditions were reached through the prior ignition of an enriched oxygen - acetylene mixture, itself ignited by glow plug. The gas mixture is chosen to target a particular pressure/temperature target, and calculated to burn out with 21% oxygen remaining. Fuel injection and combustion is then controlled to occur as the hot gas slowly passes through the desired pressure and temperature target, on the order of a second or so after the acetylene has burnt out.

The fuel was fed into the combustion test chamber to confirm that the fuel would combust when under compression ignition conditions, as well as to assess the ignition delay between admittance of the fuel to the chamber and appreciable combustion pressure increase.

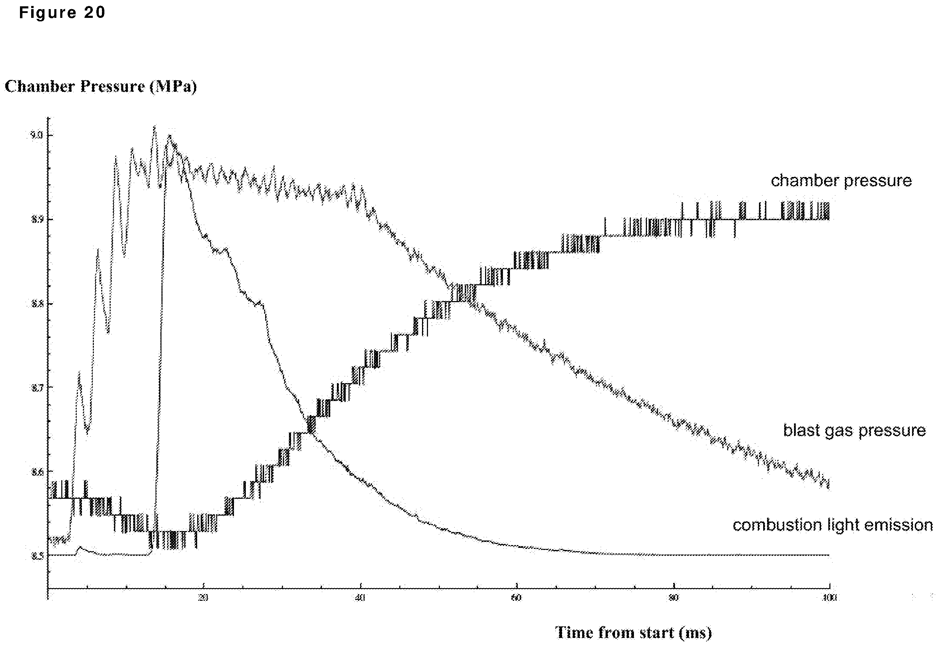

Figure 20 provides indicative graphical results from a blast atomizer experiment showing the blast gas pressure, chamber pressure and combustion light emission waveforms. It should be noted that the vertical axis labels the blue chamber pressure only. The shapes of the blast gas pressure and combustion light emission are therefore indicative only to that scale. In the run, the actual fuel pressure pulse (not shown) was a square wave rapidly reaching and maintaining 22MPa during fuel delivery, then rapidly dropping to chamber pressure as the fuel plunger bottomed out.

This graph shows that the blast atomizer's high pressure gas operation does not prevent proper ignition and combustion of the fuel. The fuel rate and quantity the blast atomizer was able to achieve was around 7 times higher than the usual 400 µm single nozzle injector could handle, since the hydraulic 7:1 intensifier was replaced with a 1:1 plunger in order to increase the fuel mass flow relative to the blast gas.

It should be appreciated that the cylinder pressure data is too noisy to extract a detailed Heat Release Rate curve.

It will be understood that the invention disclosed and defined in this specification extends to all alternative combinations of two or more of the individual features mentioned or evident from the text or drawings. All of these different combinations constitute various alternative aspects of the invention.

## Claims

1. A fuel for use in a combustion chamber of a direct-injection, compression ignition or diesel type engine, the fuel including carbonaceous particles suspended in an aqueous solvent, **characterised in that** the fuel has a viscosity that is greater than or equal to 1000 mPa.s at 25 °C for shear rates of up to 750/s and greater than or equal to 4000 mPa.s at 25 °C at a shear rate of 1/s, and wherein the mass fraction of the carbonaceous particles in the fuel is greater than or equal to 45 wt%.

2. The fuel of claim 1, wherein the viscosity is greater than or equal to 1000 mPa.s at 25 °C for shear rates of up to 1000/s.

3. The fuel of claim 1, wherein the viscosity is greater than or equal to 1000 mPa.s at 25 °C for shear rates of up to 2000/s.

4. The fuel of claim 1, wherein the fuel has a viscosity of at least one of the following:
greater than or equal to 4000 mPa.s at 25 °C at a shear rate of 0.1/s; or
greater than or equal to 6000 mPa.s at 25 °C at the shear rate of 0.1/s.

5. The fuel of any one of the preceding claims, wherein the viscosity of the fuel is generally shear thinning.

6. The fuel of any one of the preceding claims, wherein the fuel is a Bingham plastic.

7. The fuel of any one of the preceding claims, wherein the mass fraction of the carbonaceous particles in the fuel is greater than or equal to 53 wt%.

8. The fuel of any one of the preceding claims, wherein the mass fraction of the carbonaceous particles in the fuel is greater than or equal to 55 wt%.

9. The fuel of any one of the preceding claims, wherein the mass fraction of the carbonaceous particles in the fuel is greater than or equal to 60 wt%.

10. The fuel of any one of the preceding claims, wherein the carbonaceous particles have a mass average particle size of less than 20 µm.

11. The fuel of claim 10, wherein the carbonaceous particles have a mass average particle size of 10 µm to 20 µm.

12. The fuel of claim 10 or 11, wherein the carbonaceous particles have a d95 from three to ten times larger than the mass average size.

13. The fuel of any one of the preceding claims, further comprising a dispersant, wherein the dispersant is selected from the group consisting of: sodium salts of: polystyrene sulphonate, polyisoprene sulphonate, carboxyl methyl cellulose, humic acid, polyacrylates, and copolymers of acrylic acid and other acrylic monomers; sodium or ammonium salts of: lingo suphonates, naphthalene sulphonate, or naphthalene sulphonate formaldehyde condensate; cellulose ethers including hydroxyethyl cellulose or hydroxypropyl cellulose; polysaccharides including dextrin; polyoxyethylene sorbitan monooleate; rosin or saponin based dispersants; or polycarboxylates.

14. Use of a fuel of any one of the preceding claims in a combustion chamber of a compression ignition or diesel engine, preferably including an air blast injector.

15. A method for preparing a fuel of a direct-injection, compression ignition or diesel type engine including:
mixing carbonaceous particles and an aqueous solvent to form a fuel mixture of carbonaceous particles suspended in the aqueous solvent; and
adjusting the viscosity of the fuel mixture if necessary, so that the fuel mixture has a viscosity that is greater than or equal to 1000 mPa.s at 25 °C for shear rates of up to 750/s,
and greater than or equal to 4000 mPa.s at 25 °C at a shear rate of 1/s,
wherein the mass fraction of the carbonaceous particles in the fuel is greater than or equal to 45 wt%.

## Patentansprüche

1. Kraftstoff für die Verwendung in einer Brennkammer eines Motors des Typs der Direkteinspritzung, der Verdichtungszündung oder des Diesels, wobei der Kraftstoff kohlenstoffhaltige Teilchen beinhaltet, die in einem wässrigen Lösungsmittel suspendiert sind, **dadurch gekennzeichnet, dass** der Kraftstoff eine Viskosität aufweist, die größer oder gleich 1000 mPa.s bei 25 °C für Schergeschwindigkeiten von bis zu 750/s und größer oder gleich 4000 mPa.s bei 25 °C bei einer Scherrate von 1/s ist, und wobei der Massenanteil der kohlenstoffhaltigen Teilchen in dem Kraftstoff größer als oder gleich 45 Gew.-% ist.

2. Kraftstoff nach Anspruch 1, wobei die Viskosität größer als oder gleich 1000 mPa.s bei 25 °C für Scherraten von bis zu 1000/s ist.

3. Kraftstoff nach Anspruch 1, wobei die Viskosität größer als oder gleich 1000 mPa.s bei 25 °C für Scherraten von bis zu 2000/s ist.

4. Kraftstoff nach Anspruch 1, wobei der Kraftstoff eine Viskosität von wenigstens einer der Folgenden aufweist:
größer oder gleich 4000 mPa.s bei 25 °C bei einer Scherrate von 0,1/s; oder
größer oder gleich 6000 mPa.s bei 25 °C bei einer Scherrate von 0,1/s.

5. Kraftstoff nach einem der vorhergehenden Ansprüche, wobei die Viskosität des Kraftstoffs im Allgemeinen scherverdünnend ist.

6. Kraftstoff nach einem der vorhergehenden Ansprüche, wobei der Kraftstoff ein Bingham-Kunststoff ist.

7. Kraftstoff nach einem der vorhergehenden Ansprüche, wobei der Massenanteil der kohlenstoffhaltigen Teilchen in dem Kraftstoff größer oder gleich 53 Gew.-% ist.

8. Kraftstoff nach einem der vorhergehenden Ansprüche, wobei der Massenanteil der kohlenstoffhaltigen Teilchen in dem Kraftstoff größer oder gleich 55 Gew.-% ist.

9. Kraftstoff nach einem der vorhergehenden Ansprüche, wobei der Massenanteil der kohlenstoffhaltigen Teilchen in dem Kraftstoff größer oder gleich 60 Gew.-% ist.

10. Kraftstoff nach einem der vorhergehenden Ansprüche, wobei die kohlenstoffhaltigen Teilchen eine massengemittelte Teilchengröße von weniger als 20 µm aufweisen.

11. Kraftstoff nach Anspruch 10, wobei die kohlenstoffhaltigen Teilchen eine massengemittelte Teilchengröße von 10 µm bis 20 µm aufweisen.

12. Kraftstoff nach Anspruch 10 oder 11, wobei die kohlenstoffhaltigen Teilchen eine d95 aufweisen, die drei- bis zehnmal größer ist als die massengemittelte Größe.

13. Kraftstoff nach einem der vorhergehenden Ansprüche, ferner umfassend ein Dispergiermittel, wobei das Dispergiermittel aus der Gruppe ausgewählt ist, bestehend aus: Natriumsalzen von: Polystyrolsulfonat, Polyisoprensulfonat, Carboxylmethylcellulose, Huminsäure, Polyacrylaten und Copolymeren von Acrylsäure und anderen Acrylmonomeren; Natrium- oder Ammoniumsalzen von: Lingosuphonaten, Naphthalinsulfonat oder Naphthalinsulfonatformaldehydkondensat; Celluloseethern einschließlich Hydroxyethylcellulose oder Hydroxypropylcellulose; Polysacchariden einschließlich Dextrin; Polyoxyethylensorbitanmonooleat; Dispergiermitteln auf Kolophonium- oder Saponinbasis; oder Polycarboxylaten.

14. Verwendung eines Kraftstoffs nach einem der vorangehenden Ansprüche in einer Brennkammer eines Verdichtungszündungs- oder Dieselmotors, vorzugsweise einschließlich eines Luftblasinjektors.

15. Verfahren zum Herstellen eines Kraftstoffs für einen Motor des Typs der Direkteinspritzung, der Verdichtungszündung oder des Diesels, beinhaltend:
Mischen von kohlenstoffhaltigen Teilchen und einem wässrigen Lösungsmittel, um ein Kraftstoffgemisch aus kohlenstoffhaltigen Teilchen auszubilden, die in dem wässrigen Lösungsmittel suspendiert sind; und
Anpassen der Viskosität des Kraftstoffgemisches, falls erforderlich, sodass das Kraftstoffgemisch eine Viskosität aufweist, die größer oder gleich 1000 mPa.s bei 25 °C für Scherraten von bis zu 750/s,
und größer als oder gleich 4000 mPa.s bei 25 °C bei einer Scherrate von 1/s ist,
wobei der Massenanteil der kohlenstoffhaltigen Teilchen in dem Brennstoff größer oder gleich 45 Gew.-% ist.

## Revendications

1. Carburant destiné à être utilisé dans une chambre de combustion d'un moteur à injection directe, à allumage par compression ou de type diesel, le carburant incluant des particules carbonées en suspension dans un solvant aqueux, **caractérisé en ce que** le carburant a une viscosité qui est supérieure ou égale à 1000 mPa.s à 25°C pour des vitesses de cisaillement allant jusqu'à 750/s et supérieure ou égale à 4000 mPa.s à 25°C à une vitesse de cisaillement de 1/s, et dans lequel la fraction massique des particules carbonées dans le carburant est supérieure ou égale à 45 % en poids.

2. Carburant selon la revendication 1, dans lequel la viscosité est supérieure ou égale à 1000 mPa.s à 25°C pour des vitesses de cisaillement allant jusqu'à 1000/s.

3. Carburant selon la revendication 1, dans lequel la viscosité est supérieure ou égale à 1000 mPa.s à 25°C pour des vitesses de cisaillement allant jusqu'à 2000/s.

4. Carburant selon la revendication 1, dans lequel le carburant a une viscosité au moins comme suit :
supérieure ou égale à 4000 mPa.s à 25°C à une vitesse de cisaillement de 0,1/s ; ou
supérieure ou égale à 6000 mPa.s à 25°C à la vitesse de cisaillement de 0,1/s.

5. Carburant selon l'une quelconque des revendications précédentes, dans lequel la viscosité du carburant est généralement une fluidification par cisaillement.

6. Carburant selon l'une quelconque des revendications précédentes, dans lequel le carburant est un plastique de Bingham.

7. Carburant selon l'une quelconque des revendications précédentes, dans lequel la fraction massique des particules carbonées dans le carburant est supérieure ou égale à 53 % en poids.

8. Carburant selon l'une quelconque des revendications précédentes, dans lequel la fraction massique des particules carbonées dans le carburant est supérieure ou égale à 55 % en poids.

9. Carburant selon l'une quelconque des revendications précédentes, dans lequel la fraction massique des particules carbonées dans le carburant est supérieure ou égale à 60 % en poids.

10. Carburant selon l'une quelconque des revendications précédentes, dans lequel les particules carbonées ont une dimension particulaire moyenne en masse inférieure à 20 µm.

11. Carburant selon la revendication 10, dans lequel les particules carbonées ont une dimension particulaire moyenne en masse de 10 µm et 20 µm.

12. Carburant selon la revendication 10 ou 11, dans lequel les particules carbonées ont un d95 trois à dix fois supérieur à la dimension moyenne en masse.

13. Carburant selon l'une quelconque des revendications précédentes, comprenant en outre un dispersant, dans lequel le dispersant est sélectionné dans le groupe constitué de sels de sodium de : sulfonate de polystyrène, sulfonate de polyisoprène, cellulose de carboxylméthyle, acide humique, polyacrylates, et de copolymères de l'acide acrylique et d'autres monomères acrylique ; sels de sodium ou d'ammonium de : lignosulfonate, sulfonate de naphtalène ou un condensat de formaldéhyde de sulfonate de naphtalène ; éthers de cellulose incluant la cellulose d'hydroxyéthyle ou la cellulose d'hydroxypropyle ; des polysaccharides incluant la dextrine ; monooléate de polyoxyéthylène sorbitane ; dispersants à base de rosine ou saponine ; ou polycarboxylates.

14. Utilisation d'un carburant selon l'une quelconque des revendications précédentes dans une chambre de combustion d'un moteur à allumage par compression ou diesel, de préférence incluant un injecteur à jet d'air.

15. Procédé de préparation d'un carburant d'un moteur à injection directe, à allumage par compression ou de type diesel consistant à :
mélanger des particules carbonées et un solvant aqueux pour former un mélange de carburant des particules carbonées en suspension dans le solvant aqueux ; et
ajuster la viscosité du mélange de carburant si nécessaire, de telle sorte que le mélange de carburant a une viscosité qui est supérieure ou égale à 1000 mPa.s à 25°C pour des vitesses de cisaillement allant jusqu'à 750/s, et supérieure ou égale à 4000 mPa.s à 25°C à une vitesse de cisaillement de 1/s,
dans lequel la fraction massique des particules carbonées dans le carburant est supérieure ou égale à 45 % en poids.
